# EUROPEAN PATENT SPECIFICATION

(11) **EP 3 693 093 B1**
(45) Date of publication and mention of the grant of the patent: **08.03.2023**
(21) Application number: 20156568.6
(22) Date of filing: 11.02.2020
(51) Int. Cl.: B08B 9/08, A47L 15/50

(54) **SUPPORT RACK FOR OBJECTS TO BE SUBJECTED TO TREATMENT IN A TREATMENT MACHINE, AND CORRESPONDING TREATMENT MACHINE**
TRAGGESTELL FÜR GEGENSTÄNDE, DIE EINER BEHANDLUNG IN EINER BEHANDLUNGSMASCHINE UNTERZOGEN WERDEN SOLLEN, UND ENTSPRECHENDE BEHANDLUNGSMASCHINE
RÂTELIER DE SUPPORT D'OBJETS DESTINÉ À ÊTRE SOUMIS À UN TRAITEMENT DANS UNE MACHINE DE TRAITEMENT ET MACHINE DE TRAITEMENT CORRESPONDANTE

(30) Priority: 11.02.2019 IT 201900001881
(43) Date of publication of application: 12.08.2020
(73) Proprietor: Steelco S.p.A., 31039 Riese Pio X (IT)
(72) Inventor: Capovilla, Ivone, 31037 Loria (IT)
(74) Representative: Petraz, Gilberto Luigi

(56) References cited:
- EP-A1- 1 310 205
- EP-A1- 2 732 749
- EP-A1- 3 248 697
- EP-A2- 0 788 763
- DE-A1- 4 227 585
- US-A1- 2010 200 028

## Description

### FIELD OF THE INVENTION

Embodiments described here concern a support rack for objects to be subjected to treatment in a treatment machine and a corresponding treatment machine. By treatment here we generally mean pre-washing, washing, rinsing and/or drying.

In particular, the treated objects can be containers, trays or other receptacles intended for animals, or guinea pigs, reared in enclosures or receptacles for research in specialized laboratories.

### BACKGROUND OF THE INVENTION

Machines for treating objects are known, in particular machines for washing objects, such as containers or cages, particularly in the context of scientific research on laboratory animals.

Such machines have a washing chamber and shelves for the containers or cages, which are disposed fixed inside the respective washing chambers. Oscillating and rotating washing and rinsing units are provided inside the washing chamber. The shelves are supported by special fixed supports on the lateral walls of the washing chamber; the fixed supports allow the shelves to be inclined. This solution is rather complex, not very versatile and flexible as it requires special equipment on the lateral walls of the washing chamber. Furthermore, this solution makes it difficult to load the objects to be treated on the fixed shelves inside the washing chamber. One example is described in the European patent application EP-A-3.248.697.

Documents EP-A-2732749, US-A-2010/200028 and EP-A-1310205 disclose known machines and supports to washing objects.

There is therefore a need to perfect a support rack for objects to be subjected to treatment in a treatment machine and a corresponding treatment machine which can overcome at least one of the disadvantages of the state of the art.

In particular, one purpose of the present invention is to provide a support rack for objects to be subjected to washing which facilitates the operations for treating such objects, such as pre-washing, washing, rinsing and drying operations.

Another purpose of the present invention is to provide a support rack for objects to be subjected to washing which can be used for different types of objects to be washed and which is interchangeable in different treatment machines, allowing correct washing and subsequent dripping and drying of the objects as above in each of these machines.

Another purpose of the present invention is to provide a support rack for objects to be subjected to washing which allows the correct dripping or drying of the objects even in an environment outside the washing machine.

Another purpose of the present invention is to provide a machine for washing objects which is economical and simple to manufacture, manage and control.

Another purpose of the present invention is to provide a machine for washing objects which allows to increase the efficiency of the treatment and the productivity of the washing process.

The Applicant has devised, tested and embodied the present invention to overcome the shortcomings of the state of the art and to obtain these and other purposes and advantages.

### SUMMARY OF THE INVENTION

The present invention is set forth and characterized in the independent claim. Dependent claims describe other characteristics of the invention or variants to the main inventive idea.

In accordance with the above purposes, a support rack for objects to be subjected to treatment in accordance with the present invention comprises:
- a sliding support frame,
- one or more inclinable shelves pivoted along a respective side of the support frame around a respective pivoting axis to rotate so as to assume one or more distinct angular positions, inclined with respect to a base plane of the support frame.

The support rack comprises at least one guide device mounted directly on board the support frame and provided with guides shaped with a transverse profile with respect to the base plane and comprising one or more stable positioning seatings, each coordinated with a respective angular position to be assumed for the one or more inclinable shelves, each inclinable shelf being provided with an attachment portion able to slide along a respective one of the guides to selectively engage with one of the stable positioning seatings to define a corresponding one of the distinct angular positions of the one or more inclinable shelves as above.

Moreover, the profile of the guides is defined by oblong-shaped eyelets in an arc of a circle which is subtended by an angle of opening coinciding with a maximum angle of inclination of each inclinable shelf and the stable positioning seatings are defined by one or more recesses transverse with respect to an oblong development of the profile of each respective guide in which the attachment portion is able to be selectively constrained, the recesses having a radial transverse development with respect to the profile of each guide.

Advantageously, the support rack facilitates the operations for treating the objects as it can be inclined in different angular positions according to the type of objects to be treated so as to guarantee correct washing, rinsing, dripping and, possibly, drying thereof. In fact, the inclination of the objects by means of the inclinable shelves allows the correct drainage of the washing liquid from the objects themselves for the purposes of a better and faster drying.

This support rack, moreover, can be disposed with the shelves inclined both inside and also outside a treatment machine, for example, on a support plane to allow the objects to drip after they have been washed in the machine. Consequently, the support rack can be used for different types of objects to be washed and in different types of treatment machines.

The present invention also concerns a machine for treating objects provided with a treatment chamber and one or more of the support racks which can be inserted and removed slidingly like a drawer with respect to the treatment chamber as above.

Advantageously, the machine for washing objects can be made in a standardized manner without needing to introduce inside it inclination devices made specifically for known support racks.

Furthermore, the support rack in combination with the treatment machine as above allows an increase in the productivity and efficiency of the process for treating the objects since the rack, being inclinable also outside the treatment machine, allows to carry out different treatments such as, for example, dripping and drying outside the machine itself and, possibly, in other machines.

All this leads to a shorter treatment time inside the treatment machine and a greater number of objects that can be treated in sequence therein.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a perspective view of a support rack for objects to be subjected to washing in accordance with a possible embodiment of the invention;
- fig. 2 is a lateral view, partly sectioned, of the rack in fig. 1;
- fig. 3 is a perspective view of a detail of the rack in fig. 1 in a first operating condition;
- fig. 4 is a perspective view of a detail of the rack in fig. 1 in a second operating condition;
- fig. 5 a perspective view of a detail of the rack in fig. 1 in a third operating condition.
- fig. 6 is a perspective view of a machine for treating containing devices in accordance with a possible embodiment of the invention;
- fig. 7 is a partly sectioned lateral view of the machine in fig. 6.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

We will now refer in detail to the various embodiments of the present invention, of which one or more examples are shown in the attached drawings. Each example is supplied by way of illustration of the invention and shall not be understood as a limitation thereof.

Before describing these embodiments, we must also clarify that the present description is not limited in its application to details of the construction and disposition of the components as described in the following description using the attached drawings. The present description can provide other embodiments and can be obtained or executed in various other ways. We must also clarify that the phraseology and terminology used here is for the purposes of description only, and cannot be considered as limitative.

Embodiments of the present invention, described with reference to the attached drawings, concern a support rack 10 for supporting objects 11 to be treated in a treatment machine. For example, the objects 11 can be containers, cages or receptacles dedicated for the use of animals. Here and in the present description, the term "treatment" means one or more of the operations of pre-washing, washing with water, washing with hot or cold water, washing with chemical agents, combination of these washes, rinsing with hot or cold water, possible sterilization or thermal disinfection, dripping and possible drying of the objects 11.

According to the invention, the support rack 10 comprises a sliding support frame 12. The support frame 12 is configured to slide to be selectively extracted and inserted with respect to a treatment chamber, as better explained below.

The support frame 12 comprises perimeter bars which define its sides 13, to form, for example, a square or rectangular frame.

A base plane 15 is provided, delimited by the sides 13 as above. The base plane 15 can for example be defined by a grid, perforated plate, bars, crossed bars, a reticular structure or other, so as to allow the passage of washing or drying fluids, as well as the dripping and draining of the washing liquids.

The support rack 10 also comprises one or more inclinable shelves 14 pivoted along a respective side 13 of the support frame 12 around a respective pivoting axis X, X' to rotate in order to assume one or more distinct angular positions, inclined with respect to the base plane 15 of the support frame 12.

Each inclinable shelf 14 can assume different distinct angular positions on the basis of an angle of inclination α with respect to the base plane 15.

According to one embodiment, the angle α can be comprised between 0° and 60°, preferably between 0° and 45° so as to guarantee the correct treatment and subsequent dripping of the liquid from the objects 11 disposed on the support rack 10. This inclination promotes the drainage of the liquid from the objects 11, accelerating and improving the drying thereof.

According to one embodiment, a first angular position can provide an angle α comprised between 0° and 25°, preferably between 0° and 15°.

According to another embodiment, a second angular position can provide an angle α comprised between 0° and 45°, preferably between 0° and 30°.

Depending on the applications, several distinct angular positions can be provided, close to each other, in a specific and desired manner.

According to one aspect of the invention, the support rack 10 comprises at least one guide device 16 mounted directly on board the support frame 12 and provided with guides 17 shaped with a profile transverse to the base plane 15 and comprising one or more stable positioning seatings 18 each coordinated with a respective angular position to be assumed for the one or more inclinable shelves 14. Each inclinable shelf 14 is provided with an attachment portion 19 able to slide along a respective guide 17 to selectively engage with one of the stable positioning seatings 18 to define a corresponding one of the distinct angular positions of the one or more inclinable shelves 14.

In possible implementations, the guides 17 can be through or blind.

According to one embodiment, at least one guide device 16 is mounted centrally on one side 13 of the support frame 12.

According to another embodiment, at least one guide device 16 is mounted on the side 13 on which the inclinable shelf 14 is pivoted.

According to another embodiment, at least one guide device 16 is mounted on a side 13 transverse to the side 13 on which the inclinable shelf 14 is pivoted.

According to one embodiment, the guides 17 have a suitable shape to promote the movement of inclination of the inclinable shelf 14 in each angular position provided.

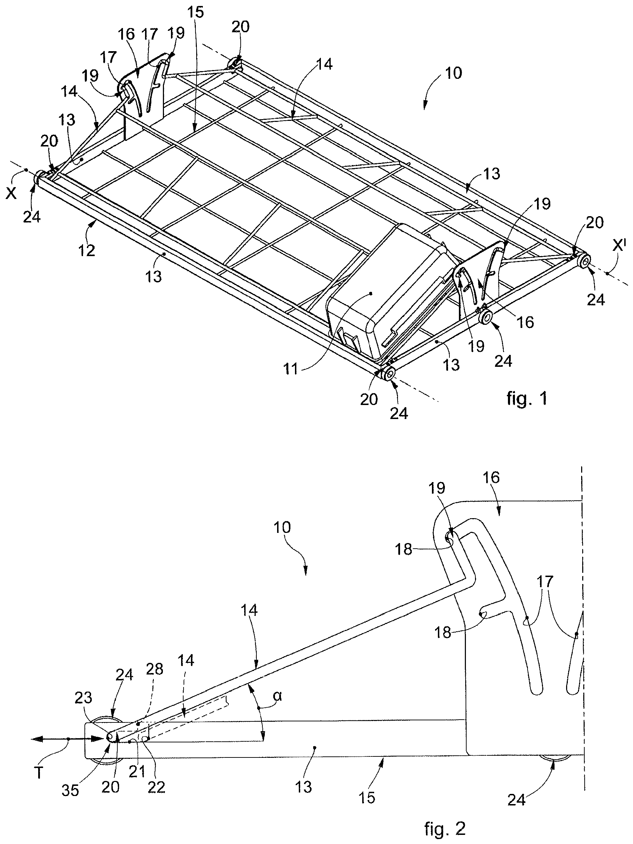

According to one embodiment, with reference to figs. 1-5, the support rack 10 comprises two guide devices 16. For example, the two guide devices 16 can be mounted symmetrically on opposite parallel sides 13 of the support frame 12 operatively connected with the one or more inclinable shelves 14.

According to the invention, the profile of the guides 17 is defined by oblong-shaped eyelets in an arc of a circle, which is subtended by an angle of opening coinciding with the maximum angle of inclination α of each inclinable shelf 14.

Furthermore, the oblong-shaped eyelets in an arc of a circle can have a radius coinciding with the side of the inclinable shelf 14 pivoted at one end to the side 13 of the support frame 12 and provided at the other end of the attachment portion 19.

According to one embodiment, the number of guides 17 of the guide device is equal to the number of inclinable shelves 14.

For example, each guide device 16 can be provided with a guide 17. This solution may be preferable when only one inclinable shelf 14 is provided.

According to one embodiment, if there is only one inclinable shelf 14, it can have a size equal to or less than the size of the base plane 15 so as to be rested on the base plane 15 when the angular position of the inclinable shelf 14 has an angle substantially equal to 0°.

According to another embodiment, the inclinable shelves 14 comprise two symmetrical inclinable shelves 14 pivoted on two opposite sides 13 of the support frame 12 so as to rest completely on the base plane 15 when the angular position of the inclinable shelf 14 is substantially horizontal. In this way the support rack 10 is compact and easy to store, both when it has one inclinable shelf and also when it has two inclinable shelves.

According to another embodiment, with reference to figs. 1-5, the guide device 16 has two symmetrical guides 17 configured to allow the inclination of the two inclinable shelves 14. In this way, by means of a single guide device 16 it is possible to guarantee the stable and correct inclination of two inclinable shelves 14.

According to the invention, the stable positioning seatings 18 are defined by one or more transverse recesses with respect to an oblong development of the profile of each respective guide 17 in which the attachment portion 19 is able to be selectively constrained. The recesses have a radial transverse development with respect to the profile of each guide 17.

According to one embodiment, the attachment portion 19 can comprise a peg 25 protruding laterally from the inclinable shelf 14 and configured to be inserted in a respective guide 17 of the guide device 16.

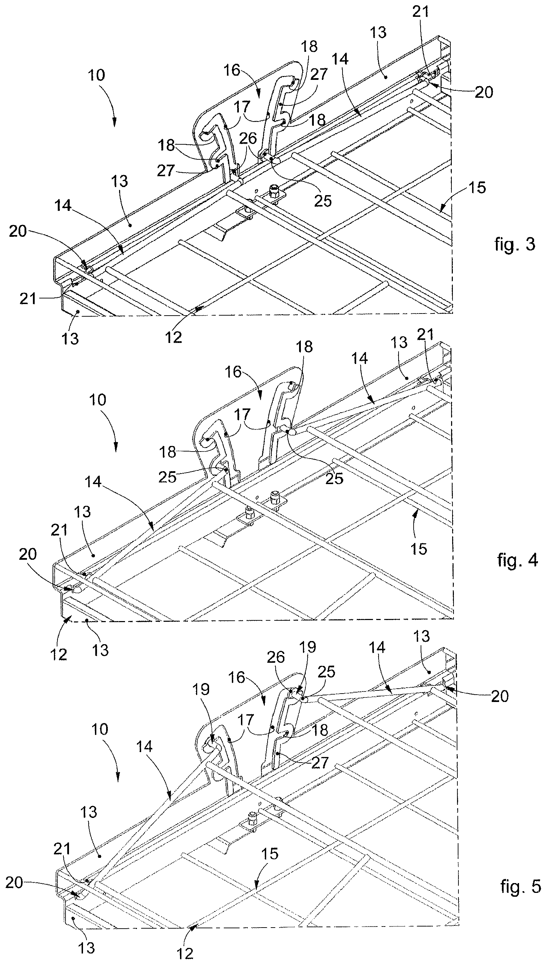

According to one embodiment, the attachment portion 19 can comprise a stop element 26 (figs. 3-5) associated with the protruding peg 25 so as to constrain the attachment portion 19 in the corresponding guide 17. The stop element 26 can be associated with the protruding peg 25 after the insertion of the latter into the respective guide 17 during the assembly step the inclinable shelf 14.

In particular, the stop element 26 can be screwed or embedded or welded to the protruding peg 25.

According to a possible embodiment, a reinforcement plate 27 (figs. 3-5) can be possibly associated with the guide device 16, which strengthens the guide device 16 itself in proximity to the guides 17 so as to better channel and constrain the coupling portion 19 in the corresponding guide 17.

According to one embodiment, each inclinable shelf 14 can be provided with two attachment portions 19, one for each inclined parallel side of the inclinable shelf 14. In this way, the inclinable shelf 14 is supported symmetrically in the respective inclined angular positions of the inclinable shelf 14.

According to one embodiment, each inclinable shelf 14 has at least two pivoting portions 20 disposed opposite along the side of the inclinable shelf 14 pivoted to the support frame 12.

According to one embodiment, with reference to figs. 1-5, two opposite parallel sides 13 of the support frame 12 are each provided with pivoting seatings 35 mating with a pivoting portion 20 for rotation around the respective pivoting axis X, X', each pivoting seating 35 comprising a sliding eyelet 21 to also allow linear sliding of the pivoting portions 20 in a direction T transverse to the respective pivoting axis X, X'.

In this way, the inclinable shelf 14 opens and closes "like a book" with respect to one side 13 of the support frame 12 on which it is pivoted, without going beyond the area delimited by the latter.

Each pivoting seating 35 can be positioned on one side 13 of the support frame 12 perpendicular to the pivoting axis X, X'.

The pivoting seatings 35 have an oblong development parallel to the oblong dimension of the side 13 of the support frame 12 on which they are provided.

According to one embodiment, the pivoting seatings 35 are made through.

According to another embodiment, the pivoting seatings 35 are made blind on the internal or external part of the side 13 of the support frame 12 depending on how the pivoting portions 20 of the inclinable shelves 14 are made.

According to one embodiment, each pivoting seating 35 has a transverse aperture 28 configured to allow the insertion of the pivoting portion 20 during the assembly and/or disassembly step of the inclinable shelf 14 onto/from the support frame 12.

According to one embodiment, each pivoting seating 35 (fig. 2) is provided with a first abutment 22 and a second abutment 23 connected by the sliding eyelet 21, the first abutment 22 defining a first angularly rotatable position of a respective pivoting portion 20, when the attachment portion 19 slides along a respective guide 17 and the second abutment 23 defining a second stable position of the respective pivoting portion 20, when the attachment portion 19 engages the respective stable positioning seat 18. Advantageously, the sliding in the transverse direction T of the pivoting portion 20 along the sliding eyelet 21 allows the attachment portion 19 to be clamped in the pivoting seatings 35.

According to one embodiment, the stable positioning seatings 18 have a length correlated to the length of the sliding eyelet 21.

In particular, with reference to fig. 3, when the pivoting portion 20 is in abutment against the first abutment 22, the attachment portion 19 follows the path of the respective guide 17 and the pivoting portion 20 behaves like a pin, with respect to which the attachment portion rotates, following the profile of the respective guide 17.

With reference to figs. 4-5, when the pivoting portion 20 is in abutment against the second abutment 23, the attachment portion 19 is inserted into one of the stable positioning seatings 18 in one of the predetermined distinct angular positions.

According to another embodiment, each inclinable shelf 14 is provided with two opposite sides, each having two opposite ends provided with a pivoting portion 20 configured to be pivoted on a side 13 of the support frame 12, and the attachment portion 19 able to slide along the guide 17 of the guide device 16.

The number of inclinable shelves 14 can depend on the size and the number of objects 11 to be treated.

The inclinable shelves 14 can be configured to assume the distinct angular positions independently of each other.

The inclinable shelves 14 can be square or rectangular in shape.

According to one embodiment, the inclinable shelves 14 are reticular or gridshaped to allow the passage of the washing liquid.

According to one embodiment, the base plane 15 of the support frame is also configured to allow the passage of the washing liquid so that it is not retained in the support rack 10.

According to one embodiment, the inclination of the inclinable shelves 14 can be manually commanded by an operator.

According to one embodiment, the inclination of the inclinable shelves 14 can be automatically commanded by an automated device (not shown) associated with the support frame 12.

According to one embodiment, the support frame 12 can comprise movement members 24, such as for example wheels, rollers or blocks, to allow the sliding movement of the support rack 10, so as to be selectively removable from and insertable into a treatment chamber, like a drawer.

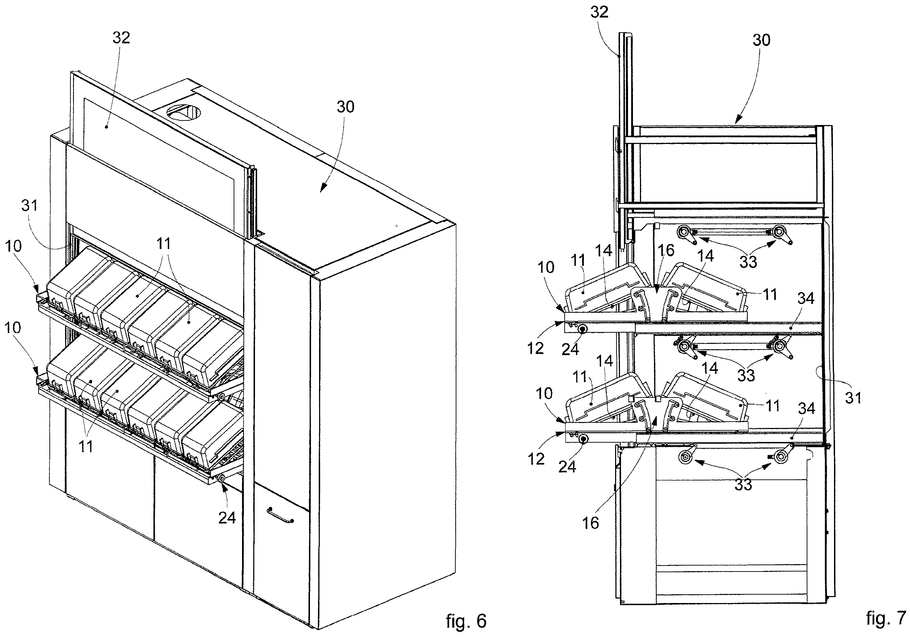

In particular, with reference to figs. 6-7, a machine 30 for treating objects 11 can be provided with a treatment chamber 31 and with one or more of the support racks 10 inserted slidingly into the treatment chamber 31.

The treatment chamber 31 can be provided with guide elements 34 configured to allow the insertion of the support racks 10 by sliding the support racks 10 along the guide elements 34 by means of the movement members 24.

The support racks 10 can be disposed side by side inside the treatment chamber 31.

The support racks 10 can be disposed on several planes, one above the other, inside the treatment chamber 31.

The objects 11 to be treated are disposed above the support racks 10, in correspondence with the inclinable shelves 14.

The inclination of the inclinable shelves 14 can be carried out before they are inserted into the treatment machine 30. In this way the support rack 10 does not require additional components inside the treatment machine 30 to allow the inclination as above; this advantageously allows to use the support racks for different types of treatment machines 30 at no additional cost. Furthermore, the inclination of the inclinable shelves 14, accelerating and improving the drying of the objects 11, allows to reduce the time the objects 11 themselves have to stay inside the treatment chamber 31.

According to a possible embodiment, the treatment machine 30 can comprise automated movement members (not shown) which are associated with the guide devices 16 once the support racks 10 are correctly inserted in the treatment chamber 31. The movement members can command the drive of the guide devices 16 in an automated manner, without requiring the intervention of an operator.

According to one embodiment, the treatment machine 30 also comprises a door 32 to open and close the treatment chamber 31 so as to carry out the treatment, for example the washing, of the objects 11.

Once the objects 11 have been treated, the support rack 10 can be removed from the treatment machine 30 with the inclinable shelves 14 inclined so as to allow the dripping and drainage of the washing or rinsing liquid, even outside the treatment machine 30. In this way it is possible to make the treatment cycle more efficient and productive by using the same machine 30 to treat further objects while others are in the process of dripping or drying outside the treatment machine 30.

The treatment machine 30 is also provided with a plurality of washing and/or rinsing devices 33 disposed above and/or below the support racks 10 so as to deliver washing and/or rinsing liquid both upward and downward. In this way the objects 11 are washed both from above and below, so as to sanitize them correctly.

In the following claims, the sole purpose of the references in brackets is to facilitate reading: they must not be considered as restrictive factors with regard to the field of protection claimed in the specific claims.

## Claims

1. Support rack for objects (11) to be subjected to treatment comprising:
- a sliding support frame (12),
- one or more inclinable shelves (14) pivoted along a respective side (13) of the support frame (12) around a respective pivoting axis (X, X') in order to rotate so as to assume one or more distinct angular positions, inclined with respect to a base plane (15) of the support frame (12),
wherein said support rack (10) comprises at least one guide device (16) mounted directly on board the support frame (12) and provided with guides (17) shaped with a transverse profile with respect to said base plane (15) and comprising one or more stable positioning seatings (18), each coordinated with a respective angular position to be assumed for said one or more inclinable shelves (14), each inclinable shelf (14) being provided with an attachment portion (19) able to slide along a respective one of said guides (17) in order to selectively engage with one of said stable positioning seatings (18) to define a corresponding one of said distinct angular positions of said one or more inclinable shelves (14), **characterized in that** the profile of said guides (17) is defined by oblong-shaped eyelets in an arc of a circle which is subtended by an angle of opening coinciding with a maximum angle of inclination (α) of each inclinable shelf (14) and said stable positioning seatings (18) are defined by one or more recesses transverse with respect to an oblong development of the profile of each respective guide (17) in which the attachment portion (19) is able to be selectively constrained, said recesses having a radial transverse development with respect to the profile of each guide (17).

2. Support rack as in any claim hereinbefore, **characterized in that** said attachment portion (19) comprises a peg (25) protruding laterally from the inclinable shelf (14) and configured to be inserted in a respective guide (17) of the guide device (16).

3. Support rack as in any claim hereinbefore, **characterized in that** each inclinable shelf (14) is provided with at least two pivoting portions (20) disposed opposite each other along the side of the inclinable shelf (14) pivoted to the support frame (12), **and in that** two opposite parallel sides (13) of the support frame (12) are each provided with pivoting seatings (35) mating with a pivoting portion (20) for rotation around the respective pivoting axis (X, X'), each pivoting seating (35) comprising a sliding eyelet (21) to also allow a linear sliding of said pivoting portions (20) in a transverse direction (T) to the respective pivoting axis (X, X').

4. Support rack as in claim 3, **characterized in that** each pivoting seating (35) is provided with a first abutment (22) and a second abutment (23) connected by said sliding eyelet (21), said first abutment (22) defining a first angularly rotatable position of a respective pivoting portion (20) when the attachment portion (19) slides along a respective guide (17), and said second abutment (23) defining a second stable position of said respective pivoting portion (20), when the attachment portion (19) engages the respective stable positioning seating (18).

5. Support rack as in claim 3 or 4, **characterized in that** the stable positioning seatings (18) have a length correlated to the length of the sliding eyelet (21).

6. Support rack as in any claim hereinbefore, **characterized in that** it comprises two guide devices (16) mounted symmetrically on opposite parallel sides (13) of the support frame (12) operatively connected to said one or more inclinable shelves (14).

7. Support rack as in any claim hereinbefore, **characterized in that** said inclinable shelves (14) comprise two symmetrical inclinable shelves (14) pivoted on two opposite sides (13) of the support frame (12) so as to rest completely on the base plane (15) when the angular position of the inclinable shelf (14) is substantially horizontal, said guide device (16) providing two symmetrical guides (17) configured to allow the inclination of said two inclinable shelves (14).

8. Machine for the treatment of objects (11) provided with a treatment chamber (31) and one or more support racks (10) as in any claim hereinbefore, which can be inserted and extracted slidingly like a drawer with respect to said treatment chamber (31).

## Patentansprüche

1. Stützgestell für Gegenstände (11), die einer Behandlung unterzogen werden sollen, umfassend:
- einen verschiebbaren Stützrahmen (12),
- ein oder mehrere neigbare Fächer (14), die schwenkbar entlang einer jeweiligen Seite (13) des Stützrahmens (12) um eine jeweilige Schwenkachse (X, X`) angeordnet sind, um sich derart zu drehen, dass sie eine oder mehrere verschiede Winkelpositionen einnehmen können, die bezüglich einer Grundebene (15) des Stützrahmens (12) geneigt sind,
wobei das Stützgestell (10) zumindest ein Führungsgerät (16) umfasst, das direkt am Stützrahmen (12) angebracht und mit Führungen (17) versehen ist, welche mit einem quer verlaufenden Profil bezüglich der Grundebene (15) geformt sind und einen oder mehrere stabile Positionierungssitze (18) umfassen, die jeweils mit einer jeweiligen Winkelposition koordiniert sind, welche für das eine oder die mehreren neigbaren Fächer (14) einzunehmen ist, wobei jedes neigbare Fach (14) mit einem Anbringungsabschnitt (19) versehen ist, der zum Gleiten entlang einer der Führungen (17) imstande ist, um zum Definieren einer der verschiedenen Winkelpositionen des einen oder der mehreren neigbaren Fächer (14) selektiv mit einem der stabilen Positionierungssitze (18) in Eingriff zu treten,
**dadurch gekennzeichnet, dass** das Profil der Führungen (17) durch länglich geformte Ösen in einem Kreisbogen definiert ist, der von einem Öffnungswinkel begrenzt wird, welcher mit einem maximalen Neigungswinkel (α) jedes neigbaren Fachs (14) übereinstimmt, und die stabilen Positionierungssitze (18) durch eine oder mehrere Aussparungen definiert sind, die quer zu einer länglichen Ausdehnung des Profil jeder jeweiligen Führung (17) verlaufen, in die der Anbringungsabschnitt (19) selektiv eingespannt werden kann, wobei die Aussparungen eine radial Querausdehnung in Bezug auf das Profil jeder Führung (17) aufweisen.

2. Stützgestell nach einem der vorhergehenden Ansprüche, **dadurch gekennzeichnet, dass** der Anbringungsabschnitt (19) einen Stift (25) umfasst, der seitlich vom neigbaren Fach (14) vorsteht und dazu konfiguriert ist, in eine jeweilige Führung (17) des Führungsgeräts (16) eingesetzt zu werden.

3. Stützgestell nach einem der vorhergehenden Ansprüche, **dadurch gekennzeichnet, dass** jedes neigbare Fach (14) mit zumindest zwei Schwenkabschnitten (20) versehen ist, die einander gegenüberliegend entlang der Seite des neigbaren Fachs (14) angeordnet sind, welche schwenkbar am Stützrahmen (12) angeordnet sind, und dass zwei gegenüberliegende parallele Seiten (13) des Stützrahmens (12) jeweils mit Schwenksitzen (35) versehen sind, die mit einem Schwenkabschnitt (20) zur Drehung um die jeweilige Schwenkachse (X, X') zusammenpassen, wobei jeder Schwenksitz (35) eine Gleitöse (21) umfasst, um ebenfalls ein lineares Gleiten der Schwenkabschnitte (20) in einer quer zur jeweiligen Schwenkachse (X, X`) verlaufenden Richtung (T) zu ermöglichen.

4. Stützgestell nach Anspruch 3, **dadurch gekennzeichnet, dass** jeder Schwenksitz (35) mit einem ersten Widerlager (22) und einem zweiten Widerlager (23), die durch die Gleitöse (21) verbunden sind, versehen ist, wobei das erste Widerlager (22) eine erste, winklig drehbare Position eines jeweiligen Schwenkabschnitts (20) definiert, wenn der Anbringungsabschnitt (19) entlang einer jeweiligen Führung (17) gleitet, und das zweite Widerlager (23) eine zweite stabile Position des jeweiligen Schwenkabschnitts (20) definiert, wenn der Anbringungsabschnitt (19) in den jeweiligen stabilen Positionierungssitz (18) eingreift.

5. Stützgestell nach Anspruch 3 oder 4, **dadurch gekennzeichnet, dass** die stabilen Positionierungssitze (18) eine Länge aufweisen, die mit der Länge der Gleitöse (21) korreliert.

6. Stützgestell nach einem der vorhergehenden Ansprüche, **dadurch gekennzeichnet, dass** es zwei Führungsgeräte (16) umfasst, die symmetrisch an gegenüberliegenden parallelen Seiten (13) des Stützrahmens (12) angebracht und mit dem einen oder mehreren Fächern (14) in Wirkverbindung stehen.

7. Stützgestell nach einem der vorhergehenden Ansprüche, **dadurch gekennzeichnet, dass** die neigbaren Fächer (14) zwei symmetrische neigbare Fächer (14) umfassen, die schwenkbar auf zwei gegenüberliegenden Seiten (13) des Stützrahmens (12) angeordnet sind, so dass sie vollständig auf der Grundebene (15) aufliegen, wenn die Winkelposition des neigbaren Fachs (14) im Wesentlichen horizontal ist, wobei das Führungsgerät (16) zwei symmetrische Führungen (17) vorsieht, die zum Ermöglichen der Neigung der zwei neigbaren Fächer (14) konfiguriert sind.

8. Maschine zur Behandlung von Gegenständen (11), die mit einer Behandlungskammer (31) und einem oder mehreren Stützgestellen (10) nach einem der vorhergehenden Ansprüche versehen ist, welche gleitend wie eine Schublade bezüglich der Behandlungskammer (31) eingeschoben und herausgezogen werden können.

## Revendications

1. Râtelier de support d'objets (11) devant être soumis à un traitement, comprenant :
- un cadre de support coulissant (12),
- une ou plusieurs étagères inclinables (14) pivotées le long d'un côté respectif (13) du cadre de support (12) autour d'un axe de pivotement respectif (X, X') afin de tourner de manière à prendre une ou plusieurs positions angulaires distinctes, inclinées par rapport à un plan de base (15) du cadre de support (12),
dans lequel ledit râtelier de support (10) comprend au moins un dispositif de guidage (16) monté directement à bord du cadre de support (12) et pourvu de guides (17) mis en forme avec un profil transversal par rapport audit plan de base (15) et comprenant un ou plusieurs sièges de positionnement stables (18), coordonnés chacun avec une position angulaire respective à prendre pour lesdites une ou plusieurs étagères inclinables (14), chaque étagère inclinable (14) étant pourvue d'une partie de fixation (19) pouvant coulisser le long d'un respectif desdits guides (17) afin de venir en prise sélectivement avec l'un desdits sièges de positionnement stables (18) pour définir une correspondante desdites positions angulaires distinctes desdites une ou plusieurs étagères inclinables (14),
**caractérisé en ce que** le profil desdits guides (17) est défini par des oeillets de forme oblongue dans un arc de cercle qui est sous-tendu par un angle d'ouverture coïncidant avec un angle d'inclinaison maximum (α) de chaque étagère inclinable (14) et lesdits sièges de positionnement stables (18) sont définis par un ou plusieurs évidements transversaux par rapport à un développement oblong du profil de chaque guide respectif (17) dans lesquels la partie de fixation (19) peut être contrainte de manière sélective, lesdits évidements présentant un développement transversal radial par rapport au profil de chaque guide (17).

2. Râtelier de support selon l'une quelconque des revendications précédentes, **caractérisé en ce que** ladite partie de fixation (19) comprend une cheville (25) faisant saillie latéralement à partir de l'étagère inclinable (14) et configurée pour être insérée dans un guide respectif (17) du dispositif de guidage (16).

3. Râtelier de support selon l'une quelconque des revendications précédentes, **caractérisé en ce que** chaque étagère inclinable (14) est pourvue d'au moins deux parties pivotantes (20) disposées l'une en face de l'autre le long du côté de l'étagère inclinable (14) pivotée sur le cadre de support (12), et **en ce que** deux côtés parallèles opposés (13) du cadre de support (12) sont pourvus chacun de sièges pivotants (35) s'appariant avec une partie pivotante (20) pour une rotation autour de l'axe de pivotement respectif (X, X'), chaque siège pivotant (35) comprenant un oeillet coulissant (21) pour permettre également un coulissement linéaire desdites parties pivotantes (20) dans une direction transversale (T) par rapport à l'axe de pivotement respectif (X, X').

4. Râtelier de support selon la revendication 3, **caractérisé en ce que** chaque siège pivotant (35) est pourvu d'une première butée (22) et d'une seconde butée (23) reliées par ledit oeillet coulissant (21), ladite première butée (22) définissant une première position de rotation angulaire d'une partie pivotante respective (20) lorsque la partie de fixation (19) coulisse le long d'un guide respectif (17), et ladite seconde butée (23) définissant une seconde position stable de ladite partie pivotante respective (20), lorsque la partie de fixation (19) vient en prise avec le siège de positionnement stable respectif (18).

5. Râtelier de support selon la revendication 3 ou 4, **caractérisé en ce que** les sièges de positionnement stables (18) présentent une longueur corrélée à la longueur de l'oeillet coulissant (21).

6. Râtelier de support selon l'une quelconque des revendications précédentes, **caractérisé en ce qu'**il comprend deux dispositifs de guidage (16) montés de manière symétrique sur des côtés parallèles opposés (13) du cadre de support (12) reliés de manière opérationnelle auxdites une ou plusieurs étagères inclinables (14).

7. Râtelier de support selon l'une quelconque des revendications précédentes, **caractérisé en ce que** lesdites étagères inclinables (14) comprennent deux étagères inclinables symétriques (14) pivotant sur deux côtés opposés (13) du cadre de support (12) de manière à reposer complètement sur le plan de base (15) lorsque la position angulaire de l'étagère inclinable (14) est sensiblement horizontale, ledit dispositif de guidage (16) fournissant deux guides symétriques (17) configurés pour permettre l'inclinaison desdites deux étagères inclinables (14).

8. Machine de traitement d'objets (11) pourvue d'une chambre de traitement (31) et d'un ou plusieurs râteliers de support (10) selon l'une quelconque des revendications précédentes, qui peuvent être insérés et extraits de manière coulissante à la manière d'un tiroir par rapport à ladite chambre de traitement (31).
